# EUROPÄISCHE PATENTANMELDUNG

(11) **EP 1 306 232 A1**
(43) Veröffentlichungstag der Anmeldung: **02.05.2003**
(21) Anmeldenummer: 02020118.2
(22) Anmeldetag: 07.09.2002
(51) Int. Cl.: B60C 9/00, B60C 9/08, B60C 15/00

(54) **Fahrzeugluftreifen mit Stahlkarkasse**

(30) Priorität: 23.10.2001 DE 10152165
(71) Anmelder: Continental Aktiengesellschaft, 30165 Hannover (DE)
(72) Erfinder: Besson, Marc-Andre, 30823 Garbsen (DE); Burfien, Jörg, 27336 Rethem/Aller (DE); Gerke, Hans-Werner, 31535 Neustadt (DE); Härtwig, Andreas, 30823 Garbsen (DE); Holste, Werner, 30539 Hannover (DE); Jeromin, Dieter, 30419 Hannover (DE); Kaldune, Norman, Charlotte, NC 28277 (US); Rösner, Michael, 30926 Seelze (DE); Seevers, Joern, 31303 Burgdorf (DE); Speckhals, Ulrich, 30177 Hannover (DE); Weber, Frank, 31535 Neustadt (DE); Rötter, Wolfgang, 30459 Hannover (DE)

(57) **Zusammenfassung**

Die Erfindung betrifft einen Fahrzeugluftreifen in Radialbauart, insbesondere für Personenkraftwagen, mit einem profilierten Laufstreifen, einem Gürtelverband aus mindestens zwei Gürtellagen, Wulstbereichen mit Wulstkernen und einer Karkasse mit Festigkeitsträgern aus Stahlkord.

Die Karkasse (5) bildet im Reifen eine C-Lagenkonstruktion und enthält Stahlkorde aus drei oder fünf Stahlfilamenten (12), die einen für alle Stahlfilamente gleichen Durchmesser von 0,12mm bis 0,15mm aufweisen.

Vorzugsweise handelt es sich dabei um eine 1x3 oder 1x5 Konstruktion.

Vorzugsweise bestehen die Stahlfilamente (12) aus einem Stahl der Festigkeitsklasse SHT (super high tensile).

## Beschreibung

Die Erfindung betrifft einen Fahrzeugluftreifen in Radialbauart mit einem profilierten Laufstreifen, einem Gürtelverband aus mindestens zwei Gürtellagen, Wulstbereichen mit Wulstkernen und einer Karkasse mit Festigkeitsträgern aus Stahlkord.

Es ist bereits vorgeschlagen worden, in der bzw. den Karkasslagen der Radialkarkasse eines Fahrzeugluftreifens anstelle der üblichen Festigkeitsträger aus textilem Material Festigkeitsträger aus Stahlkord einzusetzen. Diesbezüglich wird beispielsweise auf die EP-A-0 849 098 verwiesen. Hier wird vorgeschlagen, Stahlkorde zu verwenden, deren Filamente einen Durchmesser zwischen 0,1 mm bis 0,45 mm aufweisen, wobei die Stahlfilamente eine Zugfestigkeit von - 2000 x D + 4400 MPa aufweisen sollen, wobei D der Filamentdurchmesser ist. Ein bevorzugter Bereich für den Durchmesser der Stahlfilamente liegt zwischen 0,14 mm und 0,42 mm. Gemäß dieser Druckschrift kommt ferner eine Vielzahl unterschiedlicher Stahlkordkonstruktionen in Frage, beginnend bei Konstruktionen, die zwei Filamente aufweisen, bis zu Konstruktionen, die mehr als 10 Filamente aufweisen. Die bevorzugte Konstruktion ist eine 1 + 5 - Konstruktion. Auch die EP-A-0 987 128 befasst sich mit diesem Thema, wobei hier als untere Grenze für den Durchmesser der Stahlfilamente des Stahlkords 0,07 mm und als obere Grenze 0,45 mm erwähnt sind. Der bevorzugte Bereich liegt zwischen 0,07 mm und 0,12 mm. Auch hier können die Stahlfilamente eine Vielzahl unterschiedlicher Stahlkordkonstruktionen, wie bereits erwähnt, bilden. In beiden Druckschriften steht außerdem im Vordergrund, einen besonders hochfesten Stahl, einen sogenannten UHT (ultra high tensile) - Stahl einzusetzen, um bei hoher Festigkeit Gewichtseinsparungen erzielen zu können.

Der Erfindung liegt die Aufgabe zu Grunde, einen Fahrzeugluftreifen mit Stahlkord als Festigkeitsträger in der Karkasse derart auszuführen, dass der Reifen bei geringem Gewicht signifikant bezüglich der Handlingseigenschaften und seiner Haltbarkeit verbessert ist.

Gelöst wird die gestellte Aufgabe gemäß Anspruch 1 erfindungsgemäß dadurch, dass die Karkasse im Reifen eine C-Lagenkonstruktion bildet und Stahlkorde aus drei oder fünf Stahlfilamenten enthält, die einen für alle Stahlfilamente gleichen Durchmesser von 0,12 mm bis 0,15 mm aufweisen.

Es hat sich herausgestellt, dass die erfindungsgemäße Kombination einer C-Lagenkonstruktion mit Stahlkorden als Festigkeitsträgern, die drei oder fünf Filamente mit einem Durchmesser von 0,12 mm bis 0,15 mm aufweisen, die Handlingseigenschaften und die Haltbarkeit des Reifens signifikant verbessern kann. Ein Stahlcord, welcher aus drei oder fünf Stahlfilamenten, deren Durchmesser im Bereich zwischen 0,12 und 0,15 mm gewählt wird, besteht, ist wegen seiner Festigkeit und seiner Flexibilität für einen Einsatz als Festigkeitsträger in der Karkasse eines Reifens optimal geeignet. Erfindungsgemäß ausgeführte Reifen zeigen hervorragende Handlingseigenschaften, beispielsweise kurze Ansprechzeiten auf Lenkkräfte, ein ausgesprochen präzises Lenkverhalten, ein präzises Verhalten bei Kurvenfahrt und ein sehr stabiles Verhalten im Grenzbereich während Kurvenfahrt. Überraschender Weise kann auch eine signifikante Reduzierung des Abriebs des Laufstreifens bei erfindungsgemäß ausgeführten Reifen gegenüber Reifen mit einer Karkasse mit textilen Festigkeitsträgern, etwa Festigkeitsträgern aus Rayon, festgestellt werden. Die C-Lagenkonstruktion trägt dazu bei, dass die im Betrieb des Reifens auftretenden statischen und dynamischen Kräfte optimal in den Reifen eingeleitet und von diesem getragen werden können.

Gemäß einer bevorzugten Ausführungsform der Erfindung beträgt der Durchmesser der Filamente 0,13 mm. Bevorzugte Konstruktionen für den Stahlkord sind 1x3 oder 1x5 Konstruktionen. Der für die Stahlfilamente verwendete Stahl ist bevorzugt ein Stahl der Festigkeitsklasse SHT (super high tensile) mit einer Zugfestigkeit zwischen 3350 und 3650 MPa. Gerade diese Ausführungen haben sich in Versuchen als besonders vorteilhaft für die oben erwähnten Reifeneigenschaften herausgestellt und dürften diesbezüglich das Optimum darstellen.

Die bei der C-Lagenkonstruktion seitlich unter die radial innerste Gürtellage des Gürtelverbandes reichende Karkasslage sollte mit dieser Gürtellage jeweils mindestens 10 mm, insbesondere bis zu 30 mm, überlappen.

Die oben gestellte Aufgabe wird gemäß Anspruch 8 erfindungsgemäß auch dadurch gelöst, dass der Stahlkord in der Karkasse entweder die Konstruktion 1 x 3 oder die Konstruktion 1 x 5 aufweist und aus Stahlfilamenten der Festigkeitsklasse SHT mit einem Durchmesser von 0,13 mm besteht.

Es hat sich gezeigt, dass der Einsatz solcher Stahlkorde in der Karkasse bzw. in den Karkasslagen eines PKW-Reifens optimal ist hinsichtlich Festigkeit und Flexibilität, wobei die Flexibilität für die Dauerhaltbarkeit des Reifens von großer Bedeutung ist. Dabei scheint ein Stahlkord der Konstruktion 5 x 0,13 bezüglich Ermüdungsbeständigkeit sogar noch besser zu sein als ein Stahlkord der Konstruktion 3 x 0,13. Sowohl Stahlkorde der Konstruktion 1 x 5 als auch 1 x 3 haben sich dabei hinsichtlich ihrer dynamischen Materialeigenschaften als ausgesprochen vorteilhaft herausgestellt. Stahlkorde gleicher Konstruktion, die aber aus Einzelfilamenten mit geringerem Durchmesser bestehen, haben sich als ungenügend fest, Stahlkorde mit Stahlfilamenten größeren Durchmesser haben sich als zu steif erwiesen.

Die erzielbaren Vorteile sind dabei unabhängig von der konstruktiven Auslegung der Karkasse, diese kann in herkömmlicher Weise mit Hochschlägen ausgeführt sein oder aus einer eine C-Lagenkonstruktion bildenden Karkasslage bestehen. Dabei sind die mit erfindungsgemäß ausgeführten Reifen erzielbaren Verbesserungen der Handlingseigenschaften weitgehend unabhängig von der Ausführung der Karkasse. Ob eine Ausführung mit herkömmlichen Hochschlägen oder in C-Lagenkonstruktion gewählt wird, in jedem Fall lassen sich die bereits erwähnten Verbesserungen, wie kürzere Ansprechzeit auf Lenkkräfte, sehr präzises Lenkverhalten, präzises Verhalten bei Kurvenfahrt sowie stabiles Verhalten im Grenzbereich bei Kurvenfahrt und ein exaktes Verhalten bei Last- und Spurwechsel, feststellen.

Auch die Anzahl der Stahlkorde pro Dezimeter in der Karkasslage trägt dazu bei, die erwähnten Eigenschaften zu optimieren. Die Anzahl der Stahlkorde sollte zwischen 90 und 160 pro dm, insbesondere zwischen 100 und 135 pro dm, betragen.

Weitere Merkmale, Vorteile und Einzelheiten der Erfindung werden nun anhand der Zeichnung, die schematische Darstellungen von Ausführungsbeispielen zeigt, näher beschrieben. Dabei zeigen
Fig. 1 einen Querschnitt durch eine Ausführungsform eines erfindungsgemäß ausgeführten Fahrzeugluftreifens und
Fig. 2 und Fig.3 Querschnitte durch Ausführungsformen von erfindungsgemäß ausgeführten Stahlkorden.

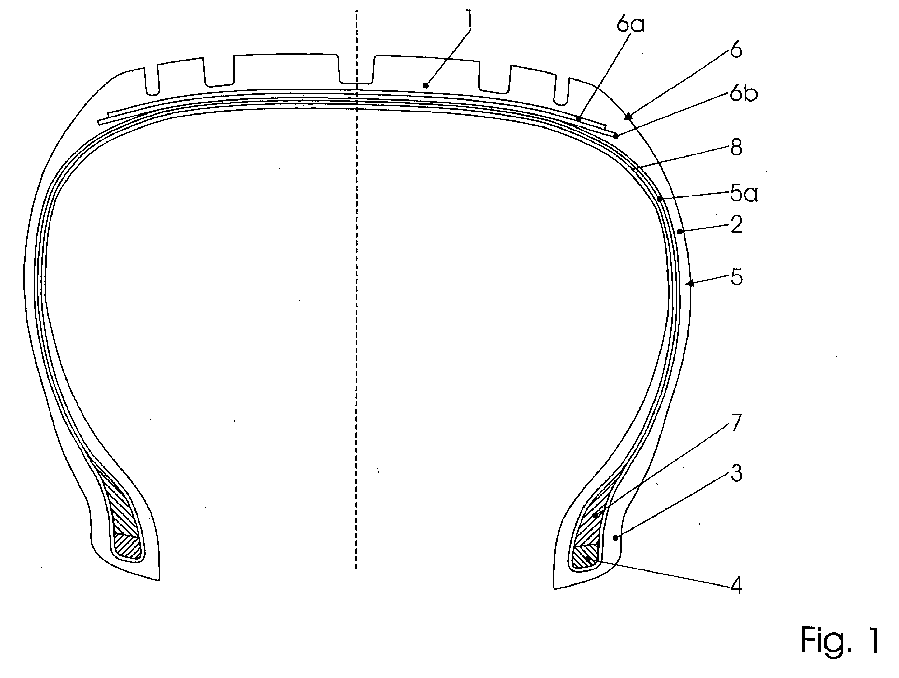

Der in Fig.1 gezeigte Fahrzeugluftreifen ist ein PKW- Radialreifen, welcher als Hauptbestandteile einen profilierten Laufstreifen 1, Seitenwände 2, Wulstbereiche 3 mit Wulstkernen 4, eine Karkasse 5, auf deren Ausgestaltung noch näher eingegangen wird, einen Gürtel 6, Kernprofile 7 und eine Innenplatte 8, die weitgehend luftdicht ausgeführt ist, aufweist. Der Gürtel 6 besteht bei der dargestellten Ausführungsform aus zwei Gürtellagern 6a, 6b, die herkömmlich ausgeführt sein können und daher insbesondere aus in Gummi eingebetteten und in jeder Lage parallel zueinander verlaufenden Stahlkorden bestehen können. Die Stahlkorde innerhalb der einen Gürtellage 6a kreuzen sich mit den Stahlkorden, die innerhalb der zweiten Gürtellage 6b verlaufen. Die radial weiter innen gelegene Gürtellage 6b ist breiter ausgeführt als die obere Gürtellage 6a.

Die Karkasse 5 bildet bei der dargestellten Ausführung eine sogenannte C-Lagenkonstruktion. Dabei wird eine einzige Karkasslage 5a beim Aufbau des Reifens derart eingebracht, dass sie im fertigen Reifen in den Seitenwänden 2 unter Einschluss der Kernprofile 7 um die Wulstkerne 4 von innen nach außen verläuft und bis unter den Gürtel 6 zurück geführt ist, sodass die Lage 5a in den Seitenwänden 2 eine zweilagige Karkasse 5 bildet. Die freien Enden reichen bis unter die radiale innere Gürtellage 6b und überlappen diese in einem Bereich von etwa 10 mm bis 30 mm, insbesondere 20 bis 30 mm.

Mit einer derartigen Ausführung der Karkasse 5 sind gewisse Vorteile verbunden. Bei einer C- Lagenkonstruktion kann die Karkasslage 5a derart im Reifen eingebaut sein, dass ihre Festigkeitsträger in radialer Richtung verlaufen oder unter einem Winkel in der Größenordnung von ca. 3° bis 4° von der exakten Radialrichtung abweichen. Durch den Umschlag im Wulstbereich und die Rückführung zum Gürtel 6 entsteht in den Seitenwänden 2 ein für die Steifigkeit des Reifens vorteilhafter Kreuzverband, demnach eine gekreuzte Anordnung der Festigkeitsträger in den beiden Lagen.

Abweichend von der gezeigten, besonders vorteilhaften C-Lagenkonstruktion kann die Karkasse auch in herkömmlicher Weise mit in den Seitenwänden endenden Hochschlägen versehen sein.

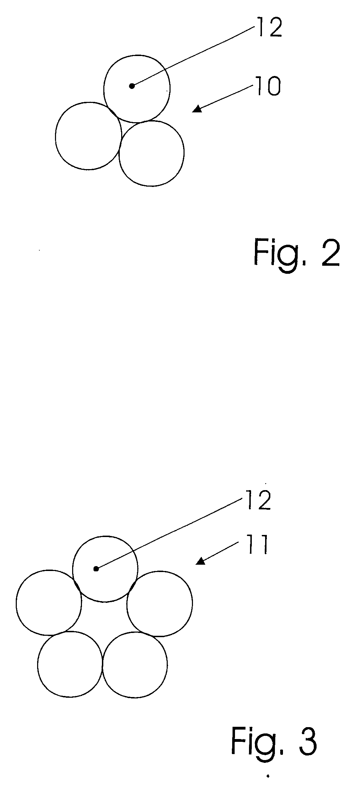

Unabhängig von ihrer Ausführung enthält gemäß der Erfindung die Karkasse 5 als Festigkeitsträger Stahlkorde bestimmter Konstruktionen bzw. Ausführungen. Dieser Stahlkord besteht entweder aus drei oder aus fünf miteinander verseilten Filamenten, insbesondere in der Konstruktion 1 x 3 bzw. 1 x 5. Fig. 2 zeigt einen Querschnitt durch einen Stahlkord 10 der Konstruktion 1 x 3 mit drei Filamenten 12, Fig. 3 zeigt einen Querschnitt durch einen Stahlkord 11 der Konstruktion 1 x 5 mit fünf Filamenten 12. Die Einzelfilamente 12 der Stahlkorde 10, 11 weisen einen Durchmesser auf, der zwischen 0,12 mm und 0,15 mm beträgt. Der bevorzugte .Durchmesser der Filamente 12 ist 0,13 mm. Dabei wird die Schlaglänge eines Stahlkordes der Konstruktion 1 x 5 zwischen 4 und 8 mm, insbesondere 5,5 mm, und die Schlaglänge eines Stahlkordes der Konstruktion 1 x 3 zwischen 3 und 7 mm, insbesondere 4,5 mm, gewählt. Es hat sich herausgestellt, dass sich mit Reifen, deren Karkasse als Festigkeitsträger solche Stahlkorde der Konstruktion 1 x 3 oder 1 x 5 enthält, die außerdem der Festigkeitsklasse SHT angehören, signifikante Verbesserungen einiger Reifeneigenschaften, insbesondere was die Handlingseigenschaften betrifft, erzielen lassen.

Besonders vorteilhaft ist es dabei, wenn die Anzahl der Stahlkorde 10, 11 in der Karkasslage 5a zwischen 90 und 160 Fäden/dm, insbesondere zwischen 100 und 135 Fäden/dm, gewählt wird.

Von Vorteil ist auch das gegenüber Reifen mit herkömmlich ausgeführten Karkassen mit textilen Festigkeitsträgern erzielbare geringere Gewicht von Reifen mit einer erfindungsgemäß ausgeführten Karkasse. Erfindungsgemäß ausgeführte Reifen zeichnen sich ferner gegenüber herkömmlichen Reifen durch eine Verbesserung des sogenannten flat-spot- Verhaltens aus (flat-spot: Deformation eines stehenden, vorher beim Betrieb heiß gelaufenen Reifens). Überraschend ist ferner, dass eine deutliche Verbesserung im Laufstreifenbetrieb und eine Abnahme von ungleichmäßigem Abrieb feststellbar sind.

Die Stahlfilamente 12 der Stahlkorde 10, 11 bestehen wie erwähnt, vorzugsweise aus Stahl der Festigkeitsklasse SHT (Super High Tensile), es kann aber auch Stahl der Festigkeitsklasse UHT (Ultra High Tensile) eingesetzt werden. Stahlfilamente der Festigkeitsklasse SHT weisen eine Zugfestigkeit zwischen 3350 und 3650 MPa, Stahlfilamente der Festigkeitsklasse UHT weisen eine Zugfestigkeit größer als 3650 MPa auf.

## Patentansprüche

1. Fahrzeugluftreifen in Radialbauart, insbesondere für Personenkraftwagen, mit einem profilierten Laufstreifen, einem Gürtelverband aus mindestens zwei Gürtellagen, Wulstbereichen mit Wulstkernen und einer Karkasse mit Festigkeitsträgern aus Stahlkord,
**dadurch gekennzeichnet,**
**dass** die Karkasse (5) im Reifen eine C-Lagenkonstruktion bildet und Stahlkorde aus drei oder fünf Stahlfilamenten (12) enthält, die einen für alle Stahlfilamente gleichen Durchmesser von 0,12 mm bis 0,15 mm aufweisen.

2. Fahrzeugluftreifen nach Anspruch 1, **dadurch gekennzeichnet, dass** der Durchmesser der Stahlfilamente (12) 0,13 mm beträgt.

3. Fahrzeugluftreifen nach Anspruch 1 oder 2, **dadurch gekennzeichnet, dass** die Stahlkorde (10) die Konstruktion 1 x 3 aufweisen.

4. Fahrzeugluftreifen nach Anspruch 3, **dadurch gekennzeichnet, dass** die Stahlkorde (10) eine Schlaglänge zwischen 3 und 7 mm aufweisen.

5. Fahrzeugluftreifen nach Anspruch 1 oder 2, **dadurch gekennzeichnet, dass** die Stahlkorde (11) die Konstruktion 1 x 5 aufweisen.

6. Fahrzeugluftreifen nach Anspruch 5, **dadurch gekennzeichnet, dass** die Stahlkorde (11) eine Schlaglänge zwischen 4 und 8 mm aufweisen.

7. Fahrzeugluftreifen nach einem der Ansprüche 1 bis 6, **dadurch gekennzeichnet, dass** die Stahlfilamente (12) aus einem Stahl der Festigkeitsklasse SHT (super high tensile) bestehen.

8. Fahrzeugluftreifen nach einem der 1 bis 7, **dadurch gekennzeichnet, dass** in der Karkasslage (5b) die Anzahl der Stahlkorde pro dm zwischen 90 und 160, insbesondere zwischen 100 und 135, beträgt.

9. Fahrzeugluftreifen nach einem der Ansprüche 1 bis 8, **dadurch gekennzeichnet, dass** die zurück geführten Lagenbereiche der Karkasslage (5a) bis. unter die Randbereiche der radial innersten Gürtellage (6b) reichen und mit dieser über einen Bereich von etwa 10 bis 30 mm, insbesondere 20 bis 30 mm, überlappen.

10. Fahrzeugluftreifen in Radialbauart, insbesondere für Personenkraftwagen, mit einem profilierten Laufstreifen, einem Gürtelverband aus mindestens zwei Gürtellagen, Wulstbereichen mit Wulstkernen und einer zumindest einlagigen Karkasse mit Festigkeitsträgern aus Stahlkord,
**dadurch gekennzeichnet,**
**dass** der Stahlkord in der Karkasse (5) entweder die Konstruktion 1 x 3 oder die Konstruktion 1 x 5 aufweist und aus Stahlfilamenten der Festigkeitsklasse SHT mit einem Durchmesser von 0,13 mm besteht.

11. Fahrzeugluftreifen nach Anspruch 10, **dadurch gekennzeichnet, dass** in der Karkasslage die Anzahl der Stahlkorde pro dm zwischen 90 und 160, insbesondere zwischen 100 und 135, beträgt.

12. Fahrzeugluftreifen nach Anspruch 10 oder 11, **dadurch gekennzeichnet, dass** die Karkasslage(n) auf herkömmlicher Weise Hochschläge bildend angeordnet ist bzw. sind.

13. Fahrzeugluftreifen nach Anspruch 10 oder 11, **dadurch gekennzeichnet, dass** die Karkasslage (5a) eine C-Lagenkonstruktion bildend angeordnet ist.

14. Fahrzeugluftreifen nach Anspruch 13, **dadurch gekennzeichnet, dass** die zurück geführten Lagenbereiche der Karkasslage (5a) bis unter die Randbereiche der radial innersten Gürtellage (6b) reichen und mit dieser über einen Bereich von etwa 10 bis 30 mm, insbesondere 20 bis 30 mm, überlappen.

15. Fahrzeugluftreifen nach einem der Ansprüche 10 bis 14, **dadurch gekennzeichnet, dass** der Stahlkord (10) der Konstruktion 3 x 0,13 mm eine Schlaglänge zwischen 3 und 7 mm aufweist.

16. Fahrzeugluftreifen nach einem der Ansprüche 10 bis 14, **dadurch gekennzeichnet, dass** der Stahlkord (11) der Konstruktion 5 x 0,13 mm eine Schlaglänge zwischen 4 und 8 mm aufweist.
